# EUROPÄISCHE PATENTSCHRIFT

(11) **EP 0 542 185 B1**
(45) Veröffentlichungstag und Bekanntmachung des Hinweises auf die Patenterteilung: **08.03.1995**
(21) Anmeldenummer: 92119182.1
(22) Anmeldetag: 10.11.1992
(51) Int. Cl.: B32B 27/34, B32B 27/36, B32B 1/08, F16L 11/04, F16L 9/12

(54) **Mehrschichtiges Kunststoffrohr**
Multilayered plastic pipe
Tuyau multicouche en plastique

(30) Priorität: 14.11.1991 DE 4137430
(43) Veröffentlichungstag der Anmeldung: 19.05.1993
(73) Patentinhaber: HÜLS AKTIENGESELLSCHAFT, 45764 Marl (DE)
(72) Erfinder: Mügge, Joachim, Dr., W-4358 Haltern (DE); Röber, Stefan, Dr., W-4370 Marl (DE)

(56) Entgegenhaltungen:
- EP-A- 0 325 030
- EP-A- 0 509 212
- WO-A-87/02680
- DE-A- 3 510 395
- DE-A- 3 827 092
- US-A- 3 561 493
- DATABASE WPIL Week 3992, Derwent Publications Ltd., London, GB; AN 92-320031 & JP-A-4224384

## Beschreibung

Gegenstand der Erfindung ist ein mehrschichtiges Kunststoffrohr.

Kunststoffrohre aus Polyamid sind bekannt und werden für vielseitige Anwendungszwecke eingesetzt. Um ihre Aufgabe zu erfüllen, müssen die Rohre u. a. inert gegen das in ihnen fließende Medium, beständig gegen hohe und tiefe Temperaturen sowie mechanische Belastungen sein.

Einschichtige Rohre sind nicht immer in der Lage, die notwendigen Anforderungen zu erfüllen. Beim Transport von z. B. aliphatischen oder aromatischen Lösemitteln, Kraftstoffen o. ä. zeigen sie erhebliche Nachteile wie mangelhafte Sperrwirkung gegen das Medium, unerwünschte Dimensionsänderungen oder zu geringe mechanische Belastbarkeit.

Es wurde versucht, diese Nachteile durch mehrschichtige Rohre auszuräumen (DE-OSS 35 10 395, 37 15 251, 38 21 723, 38 27 092, 40 01 125, 40 01 126). Die praktische Anwendung dieser Vorschläge hat jedoch gezeigt, daß zwar einzelne Nachteile vermieden werden können, daß aber das Gesamteigenschaftsbild immer noch nicht befriedigt.

Vor allem die Permeation von Methanol-haltigen Kraftstoffen konnte durch die obengenannten Vorschläge nur unzureichend verringert werden. Die Reduzierung der Permeation durch Verwendung neuartiger Zwischenschichten ist insbesondere deshalb von entscheidender Bedeutung, weil die zulässigen Emissionswerte durch gesetzliche Vorschriften immer weiter abgesenkt werden.

Die DE-A-35 10 395 beschreibt ein Mehrschichtrohr zum Transportieren von Kraftstoffen, das aus folgenden Schichten besteht:
1) einer Innenschicht aus Polyamid;
2) einer Schicht aus EVOH;
3) einer Außenschicht aus Polyamid.

Die DE-A-38 27 092 beschreibt ein Mehrschichtrohr, das aus folgenden Schichten besteht:
1) einer Innenschicht aus Polyamid;
2) einer Schicht aus EVOH;
3) einer Schicht aus Polyamid;
4) einer Außenschicht aus Polyester.

In der EP-A-0 509 212 werden Mehrschichtrohre beschrieben, deren Innen- und Außenschicht aus Polyamid besteht, wobei Innen- und Außenschicht durch eine Zwischenschicht aus einem Gemisch eines linearen, kristallinen Polyesters und eines Polyamids kraftschlüssig miteinander verbunden sind. Die Sperrwirkung gegenüber Kraftstoffen genügt jedoch noch nicht den Anforderungen.

Aufgabe der Erfindung war es, ein Polyamidrohr mit einer guten Sperrwirkung gegen das transportierte Medium, vor allem gegenüber methanolhaltigen Kraftstoffen, einer zufriedenstellenden Maßhaltigkeit sowie einer befriedigenden mechanischen Belastbarkeit zu entwickeln.

Diese Aufgabe wird gelöst durch ein mehrschichtiges Kunststoffrohr, indem es
A. aus einer Innen- und Außenschicht auf Basis einer Formmasse aus Polyamid besteht,
und beide Schichten
B. durch mindestens eine Zwischenschicht aus einer formmasse auf Basis eines linearen, kristallinen Polyesters
miteinander verbunden sind.

Ein ähnliches mehrschichtiges Kunststoffrohr wird in der EP-A-0 542 184 mit Priorität vom gleichen Tage beschrieben. Dort werden die Innen- und Außenschicht auf Basis einer Formmasse aus Polyamid durch eine Zwischenschicht verbunden, die neben einem linearen, kristallinen Polyester Zusätzlich ein Polymeres enthält, das reaktive Gruppen aufweist.

Als Polyamide (Komponente A.) kommen in erster Linie aliphatische Homo- und Copolykondensate in Frage. Als Beispiel seien die 4.6-; 6.6-; 6.12-; 8.10-; 10.10-Polyamide o. ä. genannt. Bevorzugt werden 6-; 10.12-; 11-; 12- sowie 12.12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer alpha,omega -Aminocarbonsäure bzw. von dem davon abgeleitetem Lactam ausgegangen worden ist - H. Domininghaus, "**Die Kunststoffe und ihre Eigenschaften**", Seite 272, VDI-Verlag (1976).]

Sofern Copolyamide verwendet werden, können diese z. B. Adipinsäure, Sebacinsäure, Korksäure, Isophthalsäure, Terephthalsäure als Cosäure bzw. Bis(4-aminocyclohexyl)-methan, Trimethylhexamethylendiamin, Hexamethylendiamin o. ä. als Codiamin enthalten.

Die Herstellung dieser Polyamide ist bekannt (z. B. D. B. Jacobs, J. Zimmermann, **Polymerization Processes**, S. 424-67; Interscience Publishers, New York (1977); DE-AS 21 52 194).

Ebenfalls geeignet als Polyamide sind gemischte aliphatische/aromatische Polykondensate wie sie z. B. in den US-PSS 2 071 250; 2 071 251; 2 130 523; 2 130 948; 2 241 322; 2 312 966; 2 512 606; 3 393 210 bzw. in Kirk-Othmer, **Encyclopedia of Chemical Technology**, 3. Aufl., Vol. 18, Seite 328 und 435 - Wiley & Sons (1982) beschrieben werden. Als Polyamide geeignete Polykondensate sind gleichfalls Poly(etheresteramide) bzw. Poly(etheramide). Derartige Produkte werden z. B. in DE-OSS 27 12 987, 25 23 991, 30 06 961 beschrieben.

Das Molekulargewicht (Zahlemittel) der Polyamide liegt oberhalb von 5 000, vorzugsweise oberhalb von 10 000 - entsprechend einer relativen Viskosität (ηrel) im Bereich von 1,5 bis 2,8.

Die genannten Polyamide werden für sich oder in Gemischen eingesetzt.

Die linearen, kristallinen Polyester (Komponente B.) weisen nachstehende Grundstruktur auf 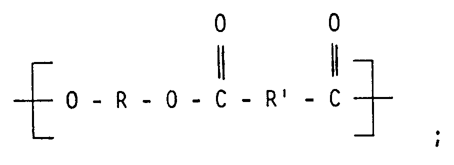
dabei stellt R einen divalenten verzweigten oder nichtverzweigten aliphatischen und/oder cycloaliphatischen Rest mit 2 bis 12, vorzugsweise 2 bis 8, C-Atomen in der Kohlenstoffkette und R' einen divalenten aromatischen Rest mit 6 bis 20, vorzugsweise 8 bis 12, C-Atomen im Kohlenstoffgerüst dar.

Als Beispiel für Diole seien Ethylenglykol, Trimethylenglykol, Tetramethylenglykol, Hexamethylenglykol, Neopentylglykol, Cyclohexandimethanol o. ä. genannt.

Bis zu 25 Mol-% des genannten Diols können durch ein zweites, bereits oben genanntes Diol oder durch ein Diol mit nachstehender allgemeiner Formel 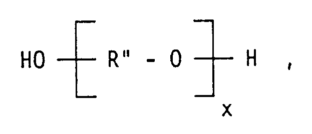
wobei R'' einen zweiwertigen Rest mit 2 bis 4 C-Atomen bedeutet und x einen Wert von 2 bis 50 annehmen kann, ersetzt sein.

Bevorzugt als Diole werden Ethylenglykol und Tetramethylenglykol eingesetzt.

Als aromatische Dicarbonsäure kommen z. B. Terephthalsäure, Isophthalsäure, 1.4-, 1.5-, 2.6- bzw. 2.7-Naphthalindicarbonsäure, Diphensäure, Diphenylether-4.4'-dicarbonsäure in Frage.

Bis zu 20 Mol-% dieser Dicarbonsäuren können durch aliphatische Dicarbonsäuren wie z. B. Bernsteinsäure, Maleinsäure, Fumarsäure, Sebacinsäure, Dodecandisäure u. a. ersetzt sein.

Die Herstellung der linearen, kristallinen Polyester gehört zum Stand der Technik (DE-OSS 24 07 155, 24 07 156; **Ullmanns Encyclopädie der technischen Chemie**, 4. Aufl., Bd. 19, Seite 65 ff. - Verlag Chemie GmbH, Weinheim, 1980).

Die erfindungsgemäß eingesetzten Polyester weisen eine Viskositätszahl (J-Wert) im Bereich von 80 bis 240 cm³/g auf.

Sofern erforderlich können die Polyamide und/oder Polyester schlagzäh eingestellt werden. Geeignete Polymere sind z. B. Ethylen/Propylen- oder Ethylen/Propylen/Dien-Copolymere (EP-A-295 076), Polypentenylen, Polyoctenylen oder statistische bzw. blockartig aufgebaute Copolymere aus alkenylaromatischen Verbindungen mit aliphatischen Olefinen oder Dienen (EP-A-261 748). Weiterhin seien schlagzähmachende Kautschuke genannt: Kern/Schale-Kautschuke mit einem zähelastischen Kern aus (Meth)Acrylat-, Butadien- oder Styrol/Butadien-Kautschuk mit Glastemperaturen T_{g} < -10 °C, wobei der Kern vernetzt sein kann. Die Schale kann aus Styrol und/oder Methylmethacrylat und/oder weiteren, ungesättigten Monomeren aufgebaut sein (DE-OSS 21 44 528, 37 28 685). Der Anteil an schlagzähmachender Komponente ist hinreichend niedrig zu wählen, so daß die gewünschten Sperreigenschaften nicht verschlechtert werden.

Der Komponente A. sowie Komponente B. können übliche Hilfs- und Zusatzstoffe wie z. B. Flammschutzmittel, Stabilisatoren, Verarbeitungshilfsmittel, Viskositätsverbesserer, Füllstoffe, Pigmente o. ä. zugefügt werden. Die Menge an Hilfs- und Zusatzstoffen, insbesondere an Verarbeitungshilfsmitteln muß so gewählt werden, daß die Sperreigenschaften nicht ernsthaft beeinflußt werden.

Die Herstellung der mehrschichtigen Kunststoffrohre erfolgt in bekannter, wie z. B. weiter oben im Stand der Technik beschriebenen Weise.

Die erfindungsgemäßen mehrschichtigen Kunststoffrohre weisen in hervorragendem Maße eine gute Beständigkeit sowie gute Sperrwirkung gegen Diffusion gegenüber den transportierten Medien, insbesondere chemischen Agenzien, Lösemitteln und Kraftstoffen auf. Neben einem 3-Schichtrohr können auch Rohre hergestellt werden, die aus z. B. 5 oder 7 Schichten bestehen, indem weitere Schichten der Komponente A. bzw. B. zusätzlich eingearbeitet werden.

Die in den Beispielen aufgeführten Ergebnisse wurden mit Hilfe nachstehender Meßverfahren bestimmt.

Die **Bestimmung der Lösungsviskosität** (rel. Viskositätηᵣₑₗ) der **Polyamide** erfolgt unter Verwendung einer 0,5 Gew.-%igen m-Kresol-Lösung bei 25 °C gemäß DIN 53 727/ISO 307.

Die **Bestimmung der Lösungsviskosität** (Viskositätszahl J) **der Polyester** erfolgt unter Verwendung einer 0,5 Gew.-%igen Lösung in einem o-Dichlorbenzol/Phenol-Gemisch (50 : 50 Gewichtsteile) bei 25 °C gemäß DIN 53 728/ISO 1628 - Teil 5.

Die **Bestimmung der Diffusion** von Kraftstoffanteilen erfolgt an Rohren mit einem Kraftstoffgemisch (Kraftstoff M15: 42,5 Vol.-Tle. Isooctan, 42,5 Vol.-Tle. Toluol und 15 Vol.-Tle. Methanol) bei 23 °C und 50 % Luftfeuchtigkeit. Die Proben mit der Länge von 20 mm werden mit dem Kraftstoffgemisch gefüllt und sind während der Messung mit einem gefüllten Vorratsbehältnis verbunden. Die Diffusion wird als Masseverlust durch Diffusion über die Zeit (Messung alle 24 h) ermittelt. Als Maß wird der pro Fläche registrierte Masseverlust angegeben, der gemessen wird, wenn sich der Diffusionsprozeß im Gleichgewicht befindet, d. h., wenn sich der pro 24 h ermittelte Masseverlust mit der Zeit nicht mehr ändert.

Mit Buchstaben gekennzeichnete Versuche sind nicht erfindungsgemäß.

### Beispiele

### A. Komponente A.

- **PA 1:**: Polyamid 12 (ηᵣₑₗ: 2,08)
- **PA 2:**: Polyamid 12 (ηᵣₑₗ: 2,10; modifiziert mit 15 Gew.-% handelsüblichem Weichmacher)
- **PA 3:**: Polyamid 6 (ηᵣₑₗ: 2,01)
- **PA 4:**: Polyamid 11 (ηᵣₑₗ: 2,18; modifiziert mit 15 Gew.-% handelsüblichem Weichmacher
- **PA 5:**: Polyamid 12 (ηᵣₑₗ: 2,1; modifiziert mit 12 Gew.-% handelsüblichem Weichmacher
- **PA 6:**: Polyamid 12 (nᵣₑₗ: 1,90)
- **PA 7:**: Polyamid 12 (ηᵣₑₗ: 2,15; modifiziert mit 7,5 Gew.-% handelsüblichem Weichmacher

### B. Komponente B.

- **Z 1:**: Mit Maleinsäureanhydrid gepfropftes Polypropylen (ADMER^{R} QF 500 - Mitsui)
- **Z 2:**: Ethylen/Vinylalkohol-Copolymerisat (EVAL^{R} EP--E 105 A - KURARAI)
- **Z 3:**: Homopolybutylenterephthalat (J-Wert: 165 cm³/g; VESTODUR^{R} 3000 - HÜLS AG)

### C. Herstellung der Rohre

Die Rohre werden auf einer Laborrohrextrusionsanlage mit einem Fünfschichtrohrwerkzeug (bei der Herstellung der Dreischichtrohre bleiben 2 Kanäle geschlossen) hergestellt. Die Speiseextruder weisen alle einen Schneckendurchmesser von 25 mm auf. Die Zylindertemperaturen lagen bei 220 °C (PA 2; PA 6; Z 1; Z 2); 230 °C (PA 1; PA 7); 235 °C (PA 5); 240 °C (PA 4); 250 °C (Z 3); 260 °C (PA 3).

Bei den Dreischichtrohren betragen die Schichtdicken von innen nach außen: 0,2 mm; 0,2 mm; 0,6 mm.
Bei dem Fünfschichtrohr (Versuch F) betragen die Schichtdicken von innen nach außen: 0,1 mm; 0,05 mm; 0,15 mm; 0,05 mm; 0,65 mm.
Bei dem Fünfschichtrohr (Versuch G) betragen die Schichtdicken von innen nach außen: 0,45 mm; 0,15 mm; 0,05 mm; 0,05 mm; 0,3 mm.

| Versuch | Innenschicht | Zwischenschicht(en) | Außenschicht | Diffusion [g·d⁻¹·m⁻²] |
|---|---|---|---|---|
| 1 | PA 6 | Z 3 | PA 7 | 1,4 |
| 2 | PA 1 | Z 3 | PA 1 | 1,2 |
| 3 | PA 2 | Z 3 | PA 2 | 1,4 |
| A | PA 1 | PA 1 | PA 1 | 30 |
| B | PA 2 | PA 2 | PA 2 | 100 |
| C | PA 3 | Z 1 | PA 2 | 65 |
| D | PA 3 | Z 2 | PA 2 | 11 |
| E | PA 4 | PA 4 | PA 4 | 60 |
| F | PA 5 | Z 1 Z 2 Z 1 | PA 5 | 3,6 |
| G | PA 3 | Z 2 PA 3 Z 1 | PA 5 | 3,7 |

## Patentansprüche

1. Mehrschichtiges Kunststoffrohr zum Transportieren von aliphatischen oder aromatischen Lösemitteln beziehungsweise Kraftstoffen, dessen Innen- und Außenschicht aus einer Formmasse aus Polyamid, gegebenenfalls einer schlagzähmachenden Komponente sowie gegebenenfalls üblichen Hilfs- und Zusatzstoffen besteht,
derart ausgebildet,
daß die Innen- und die Außenschicht durch mindestens eine Zwischenschicht miteinander verbunden sind, welche aus einer formmasse aus einem linearen, kristallinen Polyester mit einer Viskositätszahl im Bereich von 80 bis 240 cm³/g, gegebenenfalls einer schlagzähmachenden Komponente sowie gegebenenfalls üblichen Hilfs- und Zusatzstoffen besteht.

2. Mehrschichtiges Kunststoffrohr nach Anspruch 1,
dadurch gekennzeichnet,
daß die Innen- und Außenschicht 4.6-, 6-, 6.6-, 6.12-, 8.10-, 10.10-, 10.12-, 12.12-, 11- und/oder 12-Polyamide enthalten.

3. Mehrschichtiges Kunststoffrohr nach den Ansprüchen 1 und 2,
dadurch gekennzeichnet,
daß die Zwischenschicht aus einem linearen, kristallinem Polyester auf Basis von aliphatischen und/oder alicyclischen Diolen und aromatischen Dicarbonsäuren besteht.

4. Mehrschichtiges Kunststoffrohr nach den Ansprüchen 1 und 2,
dadurch gekennzeichnet,
daß die Zwischenschicht aus Poly(ethylenterephthalat) besteht.

5. Mehrschichtiges Kunststoffrohr nach den Ansprüchen 1 und 2,
dadurch gekennzeichnet,
daß die Zwischenschicht aus Poly(butylenterephthalat) besteht.

6. Mehrschichtiges Kunststoffrohr nach den Ansprüchen 1 bis 5,
dadurch gekennzeichnet,
daß die Zwischenschicht aus mehreren Schichten der Komponenten A. und/oder B. besteht.

7. Verwendung des mehrschichtigen Kunststoffrohres nach den Ansprüchen 1 bis 6 für den Stofftransport chemischer Agenzien.

8. Verwendung des mehrschichtigen Kunststoffrohres nach den Ansprüchen 1 bis 6 auf dem Kraftfahrzeugsektor.

## Claims

1. A multilayer plastic pipe for transporting aliphatic or aromatic solvents or fuels, whose inner and outer layer is composed of a moulding composition of polyamide, if desired an impact-modifying component and, if desired, customary auxiliaries and additives, characterized in that the inner and the outer layer are bonded to one another by at least one intermediate layer which is composed of a moulding composition of a linear, crystalline polyester having a viscosity number in the range from 80 to 240 cm³/g, if desired an impact-modifying component and, if desired, customary auxiliaries and additives.

2. A multilayer plastic pipe according to claim 1, characterized in that the inner and outer layers comprise 4,6-, 6-, 6,6-, 6,12-, 8,10-, 10,10-, 10,12-, 12,12-, 11-and/or 12-polyamides.

3. A multilayer plastic pipe according to either of claims 1 and 2, characterized in that the intermediate layer is composed of a linear, crystalline polyester based on aliphatic and/or alicyclic diols and aromatic dicarboxylic acids.

4. A multilayer plastic pipe according to either of claims 1 and 2, characterized in that the intermediate layer is composed of poly(ethylene terephthalate).

5. A multilayer plastic pipe according to either of claims 1 and 2, characterized in that the intermediate layer is composed of poly(butylene terephthalate).

6. Multilayer plastic pipe according to any of claims 1 to 5, characterized in that the intermediate layer is composed of several layers of components A. and/or B.

7. Use of the multilayer plastic pipe according to any of claims 1 to 6 for material transportation of chemical agents.

8. Use of the multilayer plastic pipe according to any of claims 1 to 6 in the motor vehicle sector.

## Revendications

1. Tuyau multicouche en matière synthétique pour transporter des solvants aliphatiques ou aromatiques ainsi que des carburants, dont la couche interne et la couche externe sont constituées par une masse de moulage en polyamide, le cas échéant par un composant procurant une résistance au choc, ainsi que, le cas échéant, des adjuvants et additifs usuels,
façonné de telle sorte que la couche interne et la couche externe sont reliées entre elles par au moins une couche intermédiaire qui est constituée par une masse de moulage à base d'un polyester cristallin linéaire présentant un indice de viscosité compris dans un domaine de 80 a 240 cm³ par gramme, le cas échéant, d'un composant procurant une rési stance au choc, ainsi qu'éventuellement des adjuvants et additifs usuels.

2. Tuyau multicouche en matière synthétique selon la revendication 1,
caractérisé par le fait que la couche interne et la couche externe renferment des polyamides 4,6, 6, 6,6, 6,12, 8,10, 10,10, 10,12, 12,12, 11 et/ou 12.

3. Tuyau multicouche en matière synthétique selon les revendications 1 et 2,
caractérisé par le fait que la couche intermédiaire est constituée par un polyester cristallin linéaire à base de diols aliphatiques et/ou alicycliques et d'acides dicarboxyliques aromatiques.

4. Tuyau multicouche en matière synthétique selon les revendications 1 et 2,
caractérisé par le fait que la couche intermédiaire est constituée par du téréphtalate de polyéthylène.

5. Tuyau multicouche en matière synthétique selon les revendications 1 et 2,
caractérisé par le fait que la couche intermédiaire est constituée par du téréphtalate de polybutylène.

6. Tuyau multicouche en matière synthétique selon les revendications 1 à 5,
caractérisé par le fait que la couche intermédiaire est constituée par plusieurs couches du composant A. et/ou du composant B.

7. L'utilisation du tuyau multicouche en matière synthétique selon les revendications 1 à 6, pour le transport d'agents chimiques.

8. L'utilisation du tuyau multicouche en matière synthétique selon les revendications 1 à 6, dans le secteur des camions.
